(19) Europäisches Patentamt / European Patent Office / Office européen des brevets

(11) **EP 2 584 476 A1**

(12) **DEMANDE DE BREVET EUROPEEN**

(43) Date de publication:
**24.04.2013 Bulletin 2013/17**

(51) Int Cl.:
***G06F 17/30*** *(2006.01)*

(21) Numéro de dépôt: **11306341.6**

(22) Date de dépôt: **17.10.2011**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(71) Demandeur: **Alcatel Lucent**
**75007 Paris (FR)**

(72) Inventeur: **Hong, Dohy**
**91620 Nozay (FR)**

(74) Mandataire: **Sciaux, Edmond et al**
**Alcatel-Lucent International**
**Intellectual Property & Standards**
**32 Avenue Kléber**
**92700 Colombes (FR)**

(54) **Prise en compte de la diversité du chemin pour la détermination de l'importance d'une unité d'information dans un parcours aléatoire au sein d'un réseau d'information**

(57) Procédé d'évaluation de l'importance d'une unité d'information appartenant à un ensemble d'unités d'informations reliées par une collection de liens pour former un graphe orienté, comportant
- une marche aléatoire dans ledit ensemble, comprenant le choix aléatoire à chaque étape d'un lien parmi le ou les liens contenus dans l'unité d'information, la succession des liens formant un chemin,
- et pour chaque unité d'information traversée, la détermination d'une importance comme fonction d'un nombre de fois que ladite unité d'information a été traversée, et d'une mesure de la diversité du chemin menant à ladite unité d'information lors de ladite marche aléatoire.

FIG_1

**Description**

La présente invention est relative à l'évaluation des unités d'informations dans un réseau d'information.

Elle s'applique notamment à attribution de rangs à des pages web au sein du réseau *World-Wide Web*, mais elle peut également s'appliquer de façon plus générale à toute base de données constituée d'unités d'information comportant des liens vers d'autres unités d'information (bases documentaires contenant des citations...)

Le contenu de ces réseaux d'informations comme le web est classiquement organisé sous la forme de pages, ou ressources, contenant des liens vers d'autres pages (ou vers elle-même). Une ressource se définit comme possédant une adresse (ou URL, *Unified ressource Locator*) l'identifiant de façon univoque. Une ressource est souvent constitué d'un document en langage HTML (*HyperText Markup Language*), mais elle peut comprendre tout type d'informations multimédia (images, vidéos, sons...) ou assemblage d'informations multimédias de types différents.

Ces réseaux rendent disponibles aux utilisateurs internautes un volume de contenu extrêmement important. Or, ce volume continue de croître de façon très significative, notamment du fait de l'explosion de nouvelles utilisations et de nouveaux types de contenu comme le contenu multimédia, les réseaux sociaux et plus généralement le contenu créé par les utilisateurs (« *crowd-originated content* » ou « *user-originated content* »), etc.

Afin de répondre de façon pertinente aux recherches de contenu des utilisateurs, il est primordial de structurer ce volume de contenu afin de déterminer les unités d'informations les plus intéressantes.

Une approche classique pour résoudre ce problème est connue sous le nom de « PageRank ». Cette technologie est notamment employée par le moteur de recherche de la société Google notamment afin de déterminer l'ordre selon lequel les résultats d'une recherche sont présentés à l'utilisateur.

Le principe du mécanisme PageRank est de donner un rang à une page en fonction du nombre de fois qu'un utilisateur passerait sur cette page lors d'une marche aléatoire. Ce nombre ou, ce qui revient au même, la probabilité d'un utilisateur de passer sur cette page, dépend donc de l'importance des pages qui possèdent un lien vers celle-ci. Il s'agit donc d'un calcul récursif dans lequel le PageRank d'une page dépend directement du PageRank des pages possédant un pointeur vers la page en question.

On peut considérer ce principe comme une marche aléatoire sur un graphe orienté dont les noeuds représentent les pages du web et les arcs les liens entre pages (hyperliens, ou liens hypertextes). En se basant sur l'hypothèse que l'utilisateur choisisse dans son parcours chaque lien de façon indépendante des pages précédemment visitée, il s'agit d'un processus de Markov.

Le rang (ou PageRank) peut alors être vu comme la probabilité stationnaire d'une chaîne de Markov.

Ce mécanisme a par exemple été décrit dans l'article « The Anatomy of α Large-Scale Hypertextual Web Search Engine » de S. Brin et L. Page, Standfort University, 1998, ou également dans le brevet américain US 6 285 999.

De nombreuses modifications ont été apportées ou proposées depuis la publication de la version originale de l'algorithme, mais aucune n'a fondamentalement changée le comportement générale du mécanisme.

Pourtant la demanderesse a remarqué des insuffisances dans certaines situations où le calcul du rang ne correspond pas à un résultat souhaitable.

C'est notamment le cas lorsqu'un groupe de pages forme un réseau de liens dont aucun ou très peu pointe vers une page extérieur au groupe. Ces groupes sont parfois constitués à dessein afin d'artificiellement augmenter le rang des pages de ce groupe.

Il existe donc un besoin d'améliorer la situation en proposant une amélioration de l'algorithme de détermination des rangs de pages.

L'invention a pour objet un procédé d'évaluation de l'importance d'une unité d'information appartenant à un ensemble d'unités d'informations reliées par une collection de liens pour former un graphe orienté, comportant

- une marche aléatoire dans cet ensemble, comprenant le choix aléatoire à chaque étape d'un lien parmi le ou les liens contenus dans l'unité d'information, la succession des liens formant un chemin,
- et pour chaque unité d'information traversée, la détermination d'une importance comme fonction d'un nombre de fois que l'unité d'information a été traversée et d'une mesure de la diversité du chemin menant à cette unité d'information lors de ladite marche aléatoire.

Selon un mode de réalisation de l'invention, on constitue une liste LP des unités d'information du chemin et la mesure de diversité div(LP) s'exprime par l'équation

$$div(LP) = \frac{\sum_{k=1}^{L} f(k) \times g(k)}{\sum_{k=1}^{L} f(k)}$$

dans laquelle k décrit les unités d'information présentes dans la liste LP, f et g sont des fonctions décroissantes et g est fonction de la distance entre deux occurrences d'une même unité d'information dans le chemin.

La mesure de diversité peut dépendre de la présence d'au moins une ré-occurrence de l'unité d'information dans le chemin.

Dans ce cas, la mesure de diversité peut être nulle s'il existe une ré-occurrence de l'unité d'information traversée au sein du chemin, et égale à 1 autrement.

Elle peut alternativement dépendre de la détermination de la présence de sous-chemins n0....nk de longueur k au sein du chemin.

Dans ce cas, la mesure de diversité peut être exprimée par l'équation $k=L$ div(LF')=max(0,

$$A - \sum_{k=1}^{k=L} r(k))$$ dans laquelle L est la longueur dudit chemin et l'expression r(k) est donnée par :

$$r(k) = \begin{cases} 0, si\, \exists\, p(k) \\ g(k), autrement \end{cases}$$, p(k) étant un sous-chemin de longueur k ayant pour extrémité l'unité d'information et g étant une fonction décroissante, et A une constante.

La mesure de la diversité peut également être fonction d'un nombre de ré-occurrence d'une unité d'information quelconque dans le chemin.

On peut alors constituer une liste LP des noeuds du chemin et la mesure de diversité div(LP) peut alors s'exprimer par l'équation

$$div(LP) = \frac{\sum_k f(k) \times g(Occ(k))}{\sum_k f(k)}$$

dans laquelle k décrit les noeuds présents dans la liste LP, Occ(k) représente le nombre de ré-occurrence du noeud k dans la liste LP et f et g sont deux fonctions décroissantes.

La marche aléatoire peut comprendre le saut vers une nouvelle unité d'information choisie aléatoirement, ce saut se faisant avec une probabilité complémentaire 1-d d'une probabilité d'amortissement d.

Cette probabilité d'amortissement peut dépendre de la mesure de diversité.

L'importance peut être déterminée à partir de l'importance du noeud précédent dans le chemin et d'un incrément dépendant de cette mesure de diversité.

L'invention a également pour objet un serveur comportant des moyens pour mettre en oeuvre le procédé préalablement décrit et ses modes de réalisation, dans lequel les unités d'information sont des pages web disponibles sur des serveurs de contenus connectés à ce serveur.

L'invention, ses caractéristiques et ses avantages apparaîtront de façon plus claire dans la description qui va suivre en liaison avec les figures annexées.

La figure 1 est un organigramme simplifié d'un algorithme de marche aléatoire conforme à un mode de réalisation de l'invention.

La figure 2 schématise un ensemble de noeuds formant un graphe orienté.

Le mécanisme PageRank se base notamment sur le principe selon lequel les unités d'informations (par exemple les pages web) sont reliées les unes aux autres par une collection de liens pour former un graphe orienté. Les unités d'information peuvent être assimilées aux noeuds de ce graphe.

Dans l'algorithme original de calcul du rang PageRank, on peut calculer l'importance ou rang d'un noeud donné à partir des rangs des noeuds possédant un lien vers lui.

On peut exprimer ces relations par la formule suivante donnant le rang « classique prc(i) d'une page i :

$$prc(i) = \frac{1-d}{N} + d \times \sum_j \frac{prc(j)}{N(j)}$$

dans laquelle i décrit les pages possédant un lien vers la page i, N(j) est le nombre de liens contenus dans la page j, d est un facteur d'amortissement (damping factor) et N le nombre total de noeuds.

Ce facteur d'amortissement d permet à la fois de représenter le comportement moyen d'un utilisateur qui ne fait pas que cliquer sur des liens mais également peut à tout moment redémarrer sa navigation à partir d'une nouvelle page, et de minimiser l'influence des « trous noirs ». Ces trous noirs sont des sous-ensembles de pages organisés de sorte que les liens pointent vers d'autres pages du sous-ensemble, sans jamais en sortir.

Ce facteur d'amortissement évite que l'algorithme boucle trop longtemps dans ces sous-ensembles et ne fournisse des rangs trop importants et non représentatifs de l'intérêt réel de ces pages.

Ce mécanisme est toutefois insuffisant car la valeur du facteur d'amortissement ne peut pas être trop basse car cela impacterait la pertinence du rang estimée (à la limite, le rang exprimerait alors simplement le nombre de liens entrants).

Il existe en pratique plusieurs méthodes pour calculer concrètement le rang « pageRank » prc(i) d'une page i.

Une des méthodes les plus utilisées consiste à simuler une marche aléatoire dans l'ensemble des unités d'information, c'est-à-dire la navigation aléatoire d'un utilisateur, et à itérer un compteur de visite C(i) pour chaque noeud i du graphe traversée (ou unité d'information).

Ce mécanisme repose sur le principe selon lequel au bout d'un grand nombre d'itérations, les noeuds les plus importants du graphe reçoivent davantage de visites et obtiennent de plus grandes valeurs du compteur de visite C(i). Autrement dit, la mesure de l'importance d'un noeud repose sur l'architecture du graphe et non pas sur sa valeur sémantique ou intrinsèque. Ce principe se justifie par la supposition que le graphe du web s'auto-organise, les unités d'informations (noeuds) les plus sémantiquement importantes recevant davantage de liens, elles deviennent de fait structurellement important et obtiennent in fine un rang important.

Dans la suite, l'invention sera décrite pour des pages web (ou simplement « pages ») pour un souci de clarté de l'exposé, mais l'invention peut s'appliquer à d'autres types d'unités d'information. De la même façon, ces pages formant un graphe, le mot « noeud » pourra également être utilisé dans le même sens et de façon interchangeable.

Selon cette mise en oeuvre, le rang est calculé de façon itérative. Chaque visite sur un noeud du graphe incrémente un compteur C(i) et le rang sera déterminé par la valeur finale de ce compteur. On peut démontrer que ce processus est convergeant et permet d'obtenir une valeur optimale du rang à la limite.

Le facteur d'amortissement donne directement la probabilité avec laquelle la marche aléatoire est interrompue et on la reprend sur un noeud aléatoire du graphe.

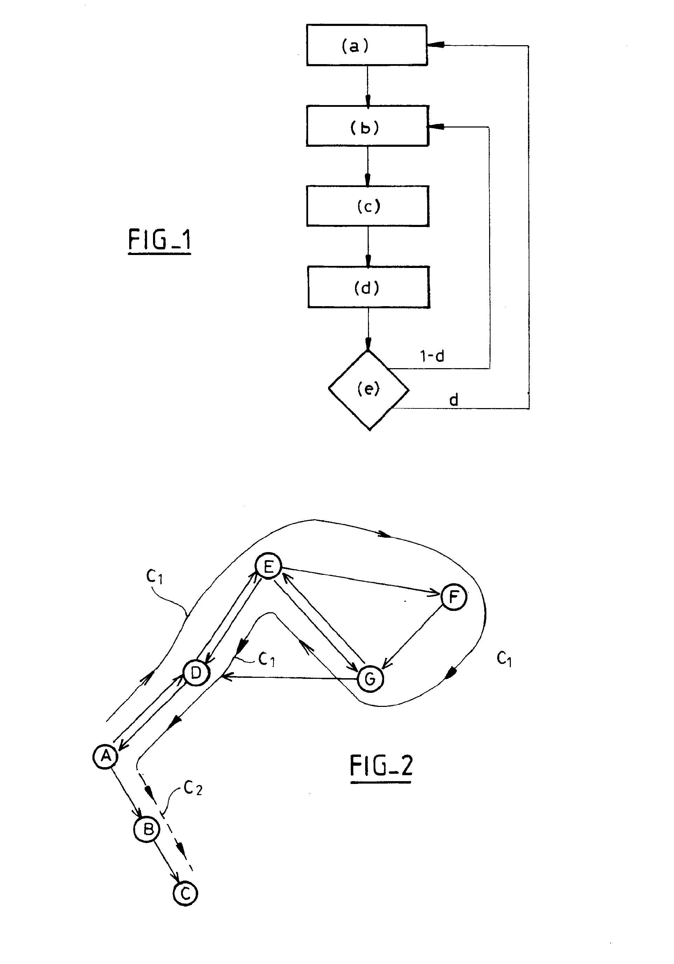

La figure 1 représente l'organigramme d'une mise en oeuvre du mécanisme de marche aléatoire conforme à l'invention. Il peut se décomposer en plusieurs étapes:

(a) sélection d'une première page,
(b) sélection d'un lien sortant vers une page suivante i,
(c) calcul d'une mesure de la diversité div(i), en fonction de liens sélectionnés préalablement,
(d) incrémentation d'un compteur de visite C(i) pour cette page suivante,
(e) reboucler vers l'étape (b) avec une probabilité d'amortissement d, ou reboucler vers l'étape (a) avec une probabilité complémentaire (1-d) de la probabilité d'amortissement.

L'étape (a) consiste à choisir, généralement de façon aléatoire, un premier noeud dans le graphe.

À l'étape (b), la sélection d'un lien sortant se fait de façon équiprobable sur l'ensemble des liens sortants de la page i.

Le processus étant itératif par le rebouclage à l'étape (f), il est possible de constituer une liste LP des noeuds ainsi traversés, représentant le chemin emprunté par la marche aléatoire. Préférentiellement, la liste LP est une liste ordonnée selon le chemin emprunté. Elle peut contenir l'ensemble complet des noeuds traversés ou bien un sous-ensemble constitué des M derniers. Dans ce dernier cas, la liste LP peut donc considérée comme une fenêtre ou une mémoire à décalage.

La mesure de la diversité div(i) pour un noeud i est déterminée à partir de cette liste LP.

Il est à noter que l'indice i représente donc l'ordre du noeud dans le chemin, et non l'identifiant du noeud. Si le chemin passe deux fois par le même noeud, la valeur de i sera donc différente à chaque traversée.

Dans les formulations données ci-dessous, on suppose que l'indice i le plus bas indique le noeud dernièrement traversé. NO est donc le noeud actuellement traversé, et n1 le noeud le plus récemment traversé. La liste LP peut donc s'écrire LP=[n1, n2, n3 ... nM]

Selon un mode de réalisation, on peut définir cette mesure de diversité par l'expression :

$$div(LP) = \frac{\sum_k f(k) \times g(Occ(k))}{\sum_k f(k)}$$

dans laquelle

- k décrit les noeuds présents dans la liste LP,
- Occ(k) est le nombre de ré-occurrence du noeud k dans la liste LP. On appelle ré-occurrence le nombre d'apparition du noeud k dans la liste au delà de la première apparition.
- f et g sont deux fonctions.

La fonction g permet de normer la valeur fournie par Occ(k). Typiquement la fonction g est soumise à deux contraintes : $\forall x$, g(x) € [0,1] et g(0)=1

La fonction f peut permettre par exemple de moduler l'influence d'un noeud en fonction de son ancienneté dans le chemin. Il est en effet intéressant d'accorder un impact plus important aux tout derniers noeuds traversés par rapport à ceux traversés 10 ou 20 itérations auparavant.

Pour ce faire, les deux fonctions f et g peuvent être des fonctions décroissantes. Plusieurs possibilités peuvent être utilisées :

- une décroissance linéaire : f(x)=1/x et g(x)=1/(x+1)
- une décroissance exponentielle : $f(x) = \chi^x$ et $g(x)= \delta^x$, avec $\chi, \delta$ € [0,1]

L'idée sous-jacente consiste à pénaliser les chemins passant plusieurs fois vers les mêmes noeuds. Cette pénalisation est plus importante pour les noeuds ayant un lien direct ou rapproché avec un tel noeud, mais moins importante pour les noeuds plus distant. En effet, plus le nombre de liens intermédiaire s'accroît et moins grande est la pertinence de cette pénalisation.

Il est à noter que dans un chemin LP ne passant jamais deux fois par le même noeud, l'ensemble des valeurs Occ(k) sont nulles. Du fait de la contrainte g(O)=1, la diversité est alors égale à 1.

Dans le cas contraire, la diversité est comprise dans l'intervalle [0, 1 [.

La figure 2 schématise un ensemble de noeuds, A, B, C, D, E, F, G formant un graphe orienté.

On suppose qu'une marche aléatoire décrive un premier chemin C1 en démarrant du noeud A pour arriver au même noeud A. Ce chemin parcourt dans l'ordre les noeuds A, D, E, F, G, E, D, A.

Lors de la deuxième traversée du noeud A, le chemin traversé s'écrit LP = [A, D, E, F, G, E, D, A].

Pour chacun des noeuds k appartenant à ce chemin, on calcule le nombre de ré-occurrence Occ(k) :

| k | Identifiant du noeud k | Occ(k) |
|---|---|---|
| 1 | A | 1 |
| 2 | D | 1 |
| 3 | G | 0 |
| 4 | F | 0 |
| 5 | E | 0 |
| 6 | D | 1 |
| 7 | A | 1 |

La diversité peut alors s'exprimer div(LP) = [f(1)xg(1) + f(2)xg(1) + f(3)xg(O) + f(4)xg(O) + f(5)xg(O) + f(6)xg(1) + f(7)xg(1)] / [f(1) + f(2) + f(3) + f(4) + f(5) + f(6) + f(7)]

Dans un mode de réalisation utilisant des décroissances linéaires pour les fonctions f et g, peut avoir div(LP)=(1x1/2 + 1/2x1/2 + 1/3x1 + 1/4x1 + 1/5x1 + 1/6x1/2 + 1/7*1/2) / (1+1/2+1/3+1/4+1/5+1/6+1/7)= 0,73

On suppose maintenant que la marche aléatoire continue et on considère le chemin C2 formé de la concaténation du chemin C1 avec le chemin [B, C]. On veut maintenant calculer la diversité lorsque la marche arrive au noeud C.

On calcule le nombre de ré-occurrence Occ(k) pour les noeuds k du chemin C2. Les valeurs sont données par le tableau ci-dessous.

| k | Identifiant du noeud k | Occ(k) |
|---|---|---|
| 1 | C | 0 |
| 2 | B | 0 |
| 3 | A | 1 |
| 4 | D | 1 |
| 5 | G | 0 |
| 6 | F | 0 |
| 7 | E | 0 |
| 8 | D | 1 |
| 9 | A | 1 |

On peut noter que dans ce tableau les 7 dernières lignes ont été décalées vers le bas et renumérotées tandis que les deux premières lignes k=1, k=2 correspondant respectivement aux noeuds C et B, ont été ajoutées.

Dans un mode de réalisation utilisant des décroissances linéaires pour les fonctions f et g, on obtient : div(LP) = 0,855

On constate donc que la mesure de diversité est plus élevée pour le chemin 2 car l'impact de la région [D, E, F, G] a été réduit. A terme, si l'on poursuit la marche aléatoire en direction du noeud Z, le poids de cette pénalisation tendra vers 0, et la valeur de la diversité tendra vers 1 (en supposant que le chemin vers le noeud Z ne traverse pas d'autres ré-occurrence de noeuds).

Selon l'invention, l'importance ou rang d'un noeud dépend notamment de la mesure de diversité ainsi calculée.

Elle peut intervenir à deux niveaux du calcul du rang:

- dans le calcul de l'incrément,
- dans le calcul de la probabilité d'amortissement

Il est également possible de faire dépendre de la mesure de diversité à la fois l'incrément et la probabilité d'amortissement.

Dans le premier cas, le rang est déterminé à partir de importance du noeud précédent dans le chemin menant au noeud i et d'un incrément dépendant de ladite mesure de diversité. Ainsi, l'étape (d) consiste à incrémenter un compteur de visite C(i) pour la page en fonction de la mesure de diversité div(LP) qui vient d'être calculée.

Ainsi, dans l'exemple de la figure 2, on incrémente le compteur de la page A de la valeur 0,73, et le compteur de la page C de la valeur 0,855. Les autres incréments n'ont pas été calculées dans la description, mais il est clair qu'à chaque étape de la marche aléatoire doit être calculé la mesure de diversité qui permet de déterminer l'incrément à appliquer au compteur courant.

Ainsi, selon l'invention, lors de la marche aléatoire, on n'incrémente pas le compte systématiquement par 1 à chaque traversée d'un noeud mais par une mesure de diversité du chemin menant à ce noeud.

Selon l'algorithme classique de marche aléatoire, on effectue un saut avec probabilité 1-d vers une page aléatoirement sélectionnée, interrompant ainsi la continuité de la marche aléatoire. Ce saut dépend de la probabilité d'amortissement d et correspond à l'étape € de l'algorithme précédemment décrit.

Dans la situation où l'on effectue un saut vers une nouvelle page, la liste LP peut être réinitialisée et le chemin repart à partir d'une liste LP vide.

Elle peut avoir une valeur fixe. Typiquement, cette valeur peut être 0,85. Selon un mode de réalisation de l'invention, la probabilité d'amortissement d peut également être fonction de la mesure de diversité div(LP).

On peut ainsi écrire d=f(div(LP)), la fonction f étant une fonction croissante, de sorte que plus un chemin possède une diversité faible plus la probabilité d'effectuer un saut devient élevée. Si la mesure de diversité est nulle, on peut déterminer que la probabilité d est également nulle et résulte sur un saut automatique sur un nouveau noeud.

D'autres mises en oeuvre de la détermination de la mesure de la diversité sont possibles.

Comme dit précédemment, ces mises en oeuvre peuvent s'appliquer à la fois à la détermination de l'incrément de l'importance ou rang d'un noeud et à la détermination de la probabilité d'amortissement.

Selon un mode de réalisation, la mesure de diversité du chemin peut s'exprimer

$$div(LP) = \frac{\sum_{k=1}^{L} f(k) \times g(k)}{\sum_{k=1}^{L} f(k)}$$

Dans ce calcul, on considère que la liste LP représentant le chemin considéré est limitée au L dernier noeuds traversés. Si moins de L noeud ont été traversés, la liste a pour longueur la longueur réelle du chemin.

Dans cette liste LP, on nomme nk le noeud en position k, n1 étant le noeud le plus récemment traversé.

Là encore, les fonctions f et g sont des fonctions décroissantes. Plusieurs possibilités sont envisageables :

- une décroissance linéaire : f(k)=1/k et

$$g(k) = 1 - \sum_{j>k, nj=nk} \frac{1}{j-k}$$

- une décroissance exponentielle : f(k) = χ$^k$ et

$$g(k) = 1 - \sum_{j>k, nj=nk} \partial^{j-k} \quad [0,1]$$

La fonction g teste l'égalité ni=nk, c'est-à-dire la ré-occurrence d'un noeud dans la liste LP. La contribution j-k mesure l'ancienneté de l'occurrence précédente nj par rapport à l'occurrence courante nk.

Cette mise en oeuvre permet de prendre en compte la distance entre les deux occurrences d'un même noeud sur le chemin, ce que la première mise en oeuvre exposée précédemment ne permettait pas.

Des expérimentations ont montré que la valeur δ=0,5 donne les meilleurs résultats dans le cas d'une liste LP de longueur L importante.

Dans une autre mise en oeuvre du calcul de la mesure de diversité, on considère une liste LP comportant l'intégralité du chemin parcouru (depuis le début du processus ou bien depuis le dernier « saut » lié à la probabilité d'amortissement).

Comme précédemment, on écrit nk le noeud ayant la position k dans la liste LP. Le noeud n1 est le noeud le plus récemment traversé et le noeud n0 est le noeud courant (c'est-à-dire actuellement traversé).

On définit une mesure intermédiaire de récurrence r(k) pour la position k par l'expression :

$$r(k) = \begin{cases} g(k) & si \exists p(k) \\ 0 & autrement \end{cases}$$

dans laquelle p(k) est un sous-chemin de LP de longueur k ayant pour extrémités n0 et nk. La mesure de diversité pour le chemin peut alors s'écrire comme fonction de ces mesures intermédiaire : $$div(LP) = A - \sum_{k=1}^{k=L} r(k)$$

avec A une constante telle que $\sum_{k=1}^{\infty} r(k) \geq 0$

On peut également écrire div(LP)=max(0, $A - \sum_{k=1}^{k=L} r(k)$ ) sans préciser de critère sur la constante A.

La fonction g est encore une fois une fonction décroissante, et plusieurs solutions sont possibles, notamment :

- une décroissance linéaire : $g(k) = \frac{1}{k}$, ou plus généralement une décroissance sous- exponentielle en 1/k$^\alpha$

- une décroissance exponentielle : $g(k) = \frac{1}{\chi^k}$

Le choix χ=2 est un choix intéressant, qui permet d'obtenir un incrément égal à 1 lorsque la diversité est maximale, c'est-à-dire lorsque tous les noeuds de la liste LP sont différents.

Autrement dit, dans cette mise en oeuvre, on fait dépendre la mesure de la diversité de la détermination de la présence de sous-chemins (n0....nk) de longueur k au sein du chemin LP.

Selon une autre mise en oeuvre, la mesure de diversité peut s'exprimer par l'équation:

$$div(LP) = \begin{cases} 0 & si \exists k, nk = n0 \\ 1 & autrement \end{cases}$$

Cette mise en oeuvre est beaucoup plus agressive et considère qu'un chemin menant à un noeud n0 possède une diversité nulle s'il est déjà passé par ce noeud n0. La présence d'un unique sous-chemin bouclant suffit pour fournir une mesure de diversité nulle.

**Revendications**

1. Procédé d'évaluation de l'importance d'une unité d'information appartenant à un ensemble d'unités d'informations reliées par une collection de liens pour former un graphe orienté, comportant

    - une marche aléatoire dans ledit ensemble, comprenant le choix aléatoire à chaque étape d'un lien parmi le ou les liens contenus dans l'unité d'information, la succession des liens formant un chemin,
    - et pour chaque unité d'information traversée, la détermination d'une importance comme fonction d'un nombre de fois que ladite unité d'information a été traversée et d'une mesure de la diversité du chemin menant à ladite unité d'information lors de ladite marche aléatoire.

2. Procédé selon la revendication précédente, dans lequel on constitue une liste LP des unités d'information dudit chemin et ladite mesure de diversité div(LP) s'exprime par l'équation

$$div(LP) = \frac{\sum_{k=1}^{L} f(k) \times g(k)}{\sum_{k=1}^{L} f(k)}$$

dans laquelle k décrit les unités d'information présentes dans ladite liste LP, f et g sont des fonctions décroissantes et g est fonction de la distance entre deux occurrences d'une même unité d'information dans ledit chemin.

3. Procédé selon la revendication 1, dans lequel ladite mesure de diversité dépend de la présence d'au moins une ré-occurrence de ladite unité d'information dans ledit chemin.

4. Procédé selon la revendication précédente, dans lequel ladite mesure de diversité est nulle s'il existe une ré-occurrence de ladite unité d'information traversée au sein dudit chemin, et égale à 1 sinon.

5. Procédé selon la revendication 3, dans lequel ladite mesure de la diversité dépend de la détermination de la présence de sous-chemins (n0....nk) de longueur k au sein dudit chemin.

6. Procédé selon la revendication 5, dans lequel ladite mesure de diversité est exprimée par l'équation div(LP)=max(0, $A - \sum_{k=1}^{k=L} r(k)$)) dans laquelle L est la longueur dudit chemin et l'expression r(k) est donnée par : $r(k) = \begin{cases} 0, si\,\exists p(k) \\ g(k), autrement \end{cases}$ , étant un sous-chemin de longueur k ayant pour extrémité ladite unité d'information et g étant une fonction décroissante, et A une constante.

7. Procédé selon la revendication 1, dans lequel ladite mesure de la diversité est fonction d'un nombre de ré-occurrence d'une unité d'information quelconque dans ledit chemin.

8. Procédé selon la revendication précédente, dans lequel on constitue une liste LP des noeuds dudit chemin et ladite mesure de diversité div(LP) s'exprime par l'équation

$$div(LP) = \frac{\sum_{k} f(k) \times g(Occ(k))}{\sum_{k} f(k)}$$

dans laquelle k décrit les noeuds présents dans ladite liste LP, Occ(k) représente le nombre de ré-occurrence du noeud k dans ladite liste LP et f et g sont deux fonctions décroissantes.

9. Procédé selon l'une des revendications précédentes, dans lequel ladite marche aléatoire comprend le saut vers une nouvelle unité d'information choisie aléatoirement, ledit saut se faisant avec une probabilité complémentaire 1-d d'une probabilité d'amortissement d.

10. Procédé selon la revendication précédente, dans lequel ladite probabilité d'amortissement dépend de ladite mesure de diversité.

11. Procédé selon l'une des revendications précédentes dans lequel l'importance est déterminée à partir de l'importance du noeud précédent dans ledit chemin et d'un incrément dépendant de ladite mesure de diversité.

12. Programme d'ordinateur disposant de moyens de code pour mettre en oeuvre le procédé selon l'une des revendications 1 à 11.

13. Serveur comportant des moyens pour mettre en oeuvre le procédé selon l'une des revendications 1 à 11, dans lequel lesdites unités d'information sont des pages web disponibles sur des serveurs de contenus connectés audit serveur.

FIG_1

FIG_2

Europäisches Patentamt

European Patent Office

Office européen des brevets

# RAPPORT DE RECHERCHE EUROPEENNE

Numéro de la demande

EP 11 30 6341

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 7 451 388 B1 (HENZINGER MONIKA R [US] ET AL) 11 novembre 2008 (2008-11-11) <br> * colonne 2, ligne 54 - colonne 3, ligne 13 * <br> * colonne 3, ligne 65 - colonne 6, ligne 5 * <br> * colonne 7, ligne 6-65 * <br> * colonne 9, ligne 3-47 * <br> * revendications; figures * <br> ----- | 1-13 | INV. G06F17/30 |
| X | US 6 285 999 B1 (PAGE LAWRENCE [US]) 4 septembre 2001 (2001-09-04) <br> * colonne 2, ligne 51 - colonne 7, ligne 55 * <br> * revendications * <br> ----- | 1-13 | |
| X | BRIN S ET AL: "The anatomy of a large-scale hypertextual Web search engine", COMPUTER NETWORKS AND ISDN SYSTEMS, NORTH HOLLAND PUBLISHING. AMSTERDAM, NL, vol. 30, no. 1-7, 1 avril 1998 (1998-04-01), pages 107-117, XP004121435, ISSN: 0169-7552, DOI: 10.1016/S0169-7552(98)00110-X <br> * sections 2.1.1 et 2.1.2 * <br> ----- | 1-13 | |
| X | US 2009/083222 A1 (CRASWELL NICHOLAS [GB] ET AL) 26 mars 2009 (2009-03-26) <br> * alinéas [0009], [0021], [0037] - [0046], [0051] - [0053], [0057] - [0065]; figures 3-5 * <br> ----- | 1-13 | |

DOMAINES TECHNIQUES RECHERCHES (IPC)

G06F

Le présent rapport a été établi pour toutes les revendications

| Lieu de la recherche | Date d'achèvement de la recherche | Examinateur |
|---|---|---|
| Munich | 21 mars 2012 | Herry, Tzvetanka |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 11 30 6341

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

21-03-2012

| Document brevet cité au rapport de recherche | | Date de publication | Membre(s) de la famille de brevet(s) | | Date de publication |
|---|---|---|---|---|---|
| US 7451388 | B1 | 11-11-2008 | AUCUN | | |
| US 6285999 | B1 | 04-09-2001 | US | 6285999 B1 | 04-09-2001 |
| | | | US | 6799176 B1 | 28-09-2004 |
| | | | US | 7058628 B1 | 06-06-2006 |
| | | | US | 7908277 B1 | 15-03-2011 |
| | | | US | 8126884 B1 | 28-02-2012 |
| | | | US | 8131715 B1 | 06-03-2012 |
| | | | US | 8131717 B1 | 06-03-2012 |
| US 2009083222 | A1 | 26-03-2009 | AUCUN | | |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6285999 B

**Littérature non-brevet citée dans la description**

- **S. BRIN ET L. PAGE.** *The Anatomy of $\alpha$ Large-Scale Hypertextual Web Search Engine,* 1998